# EUROPÄISCHE PATENTSCHRIFT

(11) **EP 1 500 543 B1**
(45) Veröffentlichungstag und Bekanntmachung des Hinweises auf die Patenterteilung: **03.01.2007**
(21) Anmeldenummer: 04010519.9
(22) Anmeldetag: 04.05.2004
(51) Int. Cl.: B60K 13/04, F01N 7/18

(54) **Abgasanlage für eine Brennkraftmaschine eines Kraftfahrzeugs**
Exhaust system for an internal combustion engine of a motor vehicle
Système d'échappement pour un moteur à combustion interne d'un véhicule automobile

(30) Priorität: 19.07.2003 DE 10332940
(43) Veröffentlichungstag der Anmeldung: 26.01.2005
(73) Patentinhaber: Dr.Ing. h.c.F. Porsche Aktiengesellschaft, 70435 Stuttgart (DE)
(72) Erfinder: Kloss, Joachim, 76228 Karlsruhe (DE); Mann, Harald, 71642 Ludwigsburg (DE)

(56) Entgegenhaltungen:
- EP-A- 1 068 979
- US-A- 4 596 304
- PATENT ABSTRACTS OF JAPAN Bd. 2003, Nr. 08, 6. August 2003 (2003-08-06) -& JP 2003 120282 A (MAZDA MOTOR CORP), 23. April 2003 (2003-04-23)

## Beschreibung

Die Erfindung bezieht sich auf eine Abgasanlage eines Kraftfahrzeugs nach den Oberbegriff des Patentanspruchs 1.

Es ist eine in ein Kraftfahrzeug einbaubare Abgasanlage bekannt US 4,596,304, die parallel zu einer sich in Fahrzeugquerrichtung erstreckenden Brennkraftmaschine verläuft und unter Zwischenschaltung elastischer Stützlager an fahrzeugfesten Strukturen eines Aufbaus befestigt ist. Bei dieser Ausführung sind von einem Schalldämpfer der Abgasanlage einarmige Hebel der Stützlager weggeführt, und zwar benachbart von Stirnseiten des Schalldämpfers. Darüber hinaus ist ein Rohrabschnitt der Abgasanlage, der mit Abstand zum Schalldämpfer angeordnet ist, zwischen den Stirnseiten mit besagtem Schalldämpfer über ein elastisches Lager verbunden.

Die gattungsbildende JP 2003-120282 A beschreibt eine Abgasanlage für eine Brennkraftmaschine, die einen Schalldämpfer umfasst, der unter Verwendung einer ersten Stützvorrichtung und einer zweiten Stützvorrichtung an festen Aufbaustrukturen des Fahrzeugs in Lage gehalten ist. Beide Stützvorrichtungen sind jeweils seitlich des Schalldämpfers beabstandet angeordnet und unter Vermittlung zweiarmiger Traghebel an den angrenzenden Aufbaustrukturen befestigt.

Die EP 1 068 979 A2 offenbart eine Abgasanlage mit einem Schalldämpfer, der mittels einer Aufhängungseinrichtung, die eine erste und eine zweite Stützvorrichtung aufweist. Beide Stützvorrichtungen sind miteinander mittels einer Tragkonsole verbunden, wobei diese an dem Getriebe des Fahrzeugs befestigt ist.

Die US 4,961, 403 zeigt einen quer zur Fahrzeuglängsrichtung eines Kraftfahrzeugs angeordneten Schalldämpfer, der an Längsseiten mittels Hängelager und Stützlager an einer den Schalldämpfer umgebenden Rahmenstruktur befestigt ist.

Es ist Aufgabe der Erfindung einen Schalldämpfer einer Abgasanlage mit Lagern an einem Aufbau eines Kraftfahrzeugs funktionsgerecht aufzuhängen. Dabei sollten sich die Lager durch einfache Konstruktion und leicht herstellbare Bauteile auszeichnen

Erfindungsgemäß wird diese Aufgabe durch die Merkmale des Patentanspruchs 1 gelöst. Weitere, die Erfindung ausgestaltende Merkmale sind in den nachfolgenden Unteransprüchen enthalten.

Die mit der Erfindung hauptsächlich erzielten Vorteile sind darin zu sehen, dass der Schalldämpfer der Abgasanlage mittels der Lager in der Weise gehalten ist, dass die auftretenden Belastungen technisch vorteilhaft aufgenommen werden. Dies wird noch durch die zweiarmigen Traghebel der Stützlager unterstützt, die sich, weil mit Abstand zu den Stirnseiten des Schalldämpfers verlaufend, leicht zwischen dem Schalldämpfer und angrenzenden Aufbaustrukturen des Kraftfahrzeugs einbauen lassen. Außerdem sind die Bauteile dieser Stützlager auf wirtschaftliche Weise herstellbar.

In der Zeichnung wird ein Ausführungsbeispiel der Erfindung gezeigt, das nachstehend näher erläutert wird.

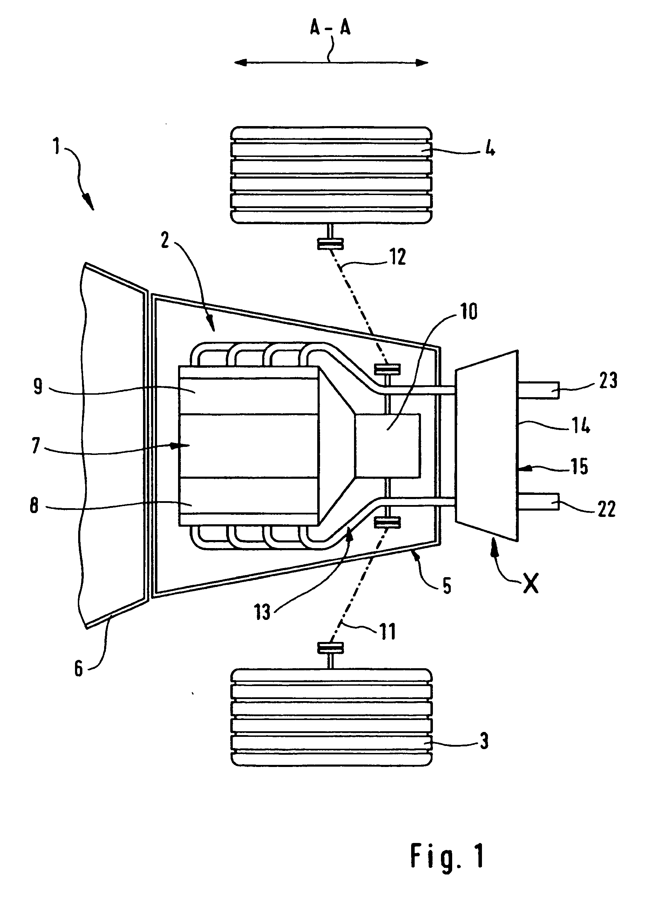

Es zeigen
- Fig. 1: eine schematische Teilansicht eines Kraftfahrzeugs von oben mit der Abgasanlage nach der Erfindung,
- Fig. 2: eine Einzelheit der Fig. 1 in größerem Maßstab,

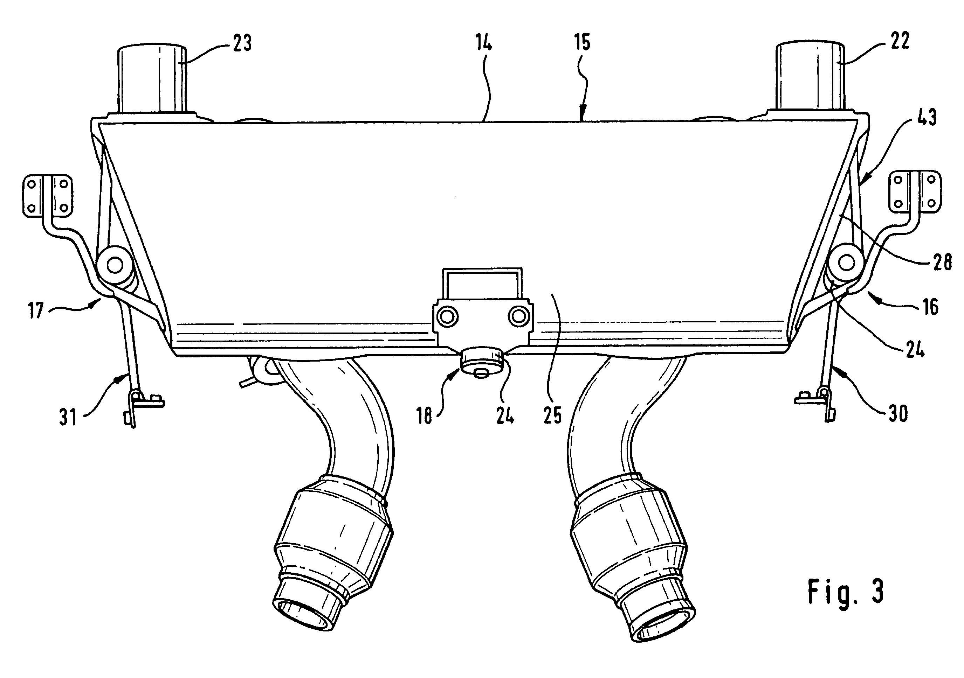

- Fig. 3: eine Schrägansicht von links oben eines Schalldämpfers der Abgasanlage,
- Fig. 4: eine Schrägansicht eines Stützlagers von links oben

Ein Kraftfahrzeug 1 wird von einer Antriebseinheit 2 über Hinterräder 3 und 4 angetrieben. Die Antriebseinheit 2 - Mittelmotor Bauweise - ist in einen Aggregatträger 5 eines Aufbaus 6 eingesetzt und umfasst eine Brennkraftmaschine 7 mit gegenüberliegenden Zylinderreihen 8 und 9 sowie ein Getriebe 10, das unter Vermittlung von Achswellen 11 und 12 mit den Hinterrädern 3 und 4 zusammenwirkt.

Die Brennkraftmaschine 7 ist mit einer Abgasanlage 13 verbunden, die hinter dem Aggregatträger 5 mit einem eine Gehäusewandstruktur 14 besitzenden Schalldämpfer 15 versehen ist. Der Schalldämpfer 15 ist quer zur Fahrzeuglängsrichtung A-A eingebaut und unter Vermittlung erster, zweiter und dritter Stützlager 16,17 und 18 an festen Aufbaustrukturen 19,20 und 21 des Aufbaus 6 gehalten. Von der Gehäusewandstruktur I4 weggeführt sind Endrohre 22 und 23, die in Fahrzeuglängsrichtung A-A ausgerichtet sind.

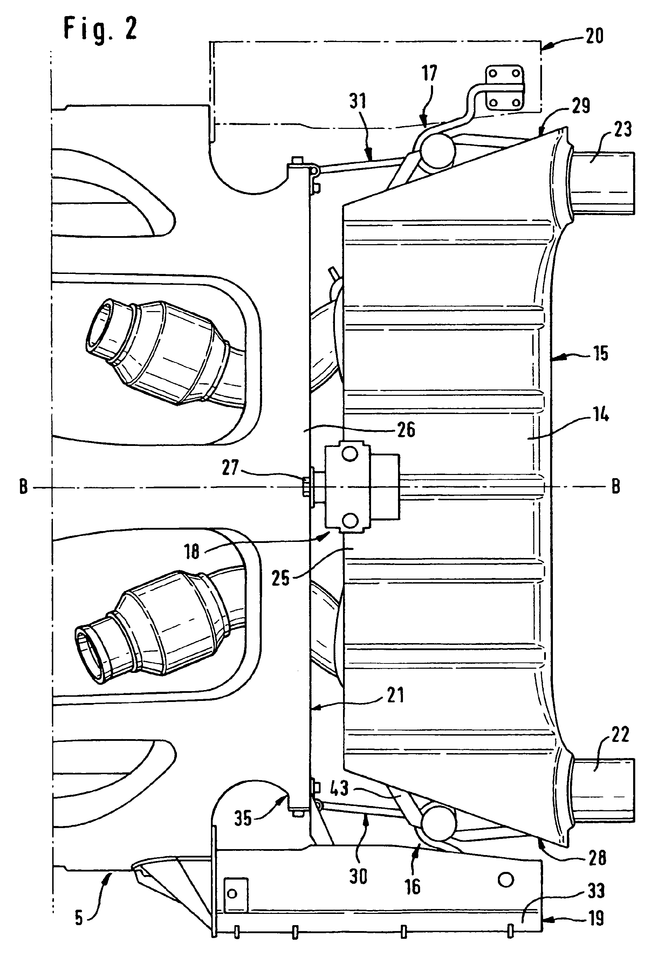

Die Stützlager 16,17 und 18 sind in Form einer Dreipunktlagerung zueinander angeordnet, wobei das dritte mit einem elastischen Lagerelement 24 versehene Stützlager 18 einerseits an einem vorderen Wandabschnitt 25 der Gehäusewandstruktur 14 und anderseits an einem hinteren Querträger 26 der Aufbaustruktur 21 angeschlossen ist. Darüber hinaus ist das dritte Stützlager 18 unter Zwischenschaltung einer Schraube 27 mit dem Querträger 26 verbunden, und es erstreckt sich in einer Mittellängsebene B-B des Kraftfahrzeugs 1 - Fig. 2 -.

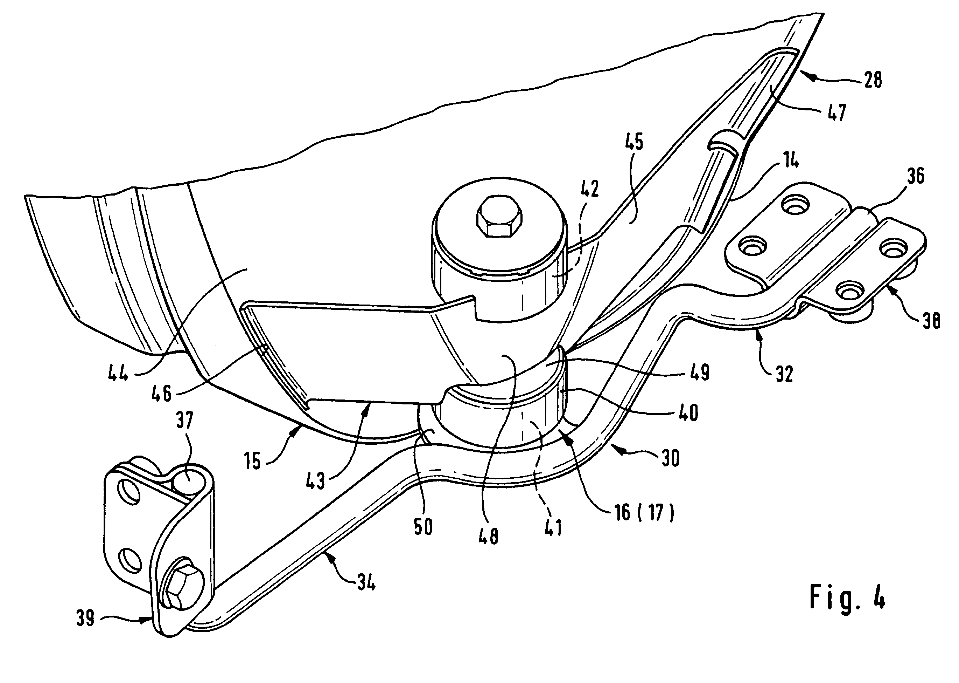

Das erste Stützlager 16 und das zweite Stützlager 17 verlaufen mit Abstand zu Stirnseiten 28 und 29 des bspw. einen ovalen Querschnitt besitzenden Schalldämpfers 15, wobei diese Stützlager unter Vermittlung zweiarmiger Traghebel 30 und 31 an den Aufbaustrukturen 19 und 20 befestigt sind, welche Traghebel 30 und 31 im wesentlichen baugleich sind. Der federnde Eigenschaften besitzende Traghebel 30 - Fig. 4 - ist mit einem hinteren Hebelarm 32 an einer Pralldämpfereinheit 33 und einem vorderen Hebelarm 34 mit einem Trägerelement 35 des Aggregatträgers 5 verbunden. Dabei sind sowohl die Pralldämpfereinheit 33 wie auch das Trägerelement 35 Bestandteil der Aufbaustruktur 19. Außerdem sind freie Enden 36 und 37 des Traghebels 30 bzw. der Hebelarme 32 und 34 mit Befestigungskonsolen 38 und 39 versehen.

Gemäß Fig. 4 ist das erste Stützlager 17 mit einem Aufnahmegehäuse 40 für elastische Elemente 41 und 42 versehen, das an dem Traghebel 30 befestigt ist. Hierbei ist das erste Stützlager 17 unter Vermittlung des Aufnahmegehäuses 40 an einer Konsole 43 einer benachbarten Wand 44 der Stirnseite 28 des Schalldämpfers 15 befestigt. Die Konsole 43 ist eine aufrechte Platte 45, die sich in Fahrzeuglängsrichtung A-A erstreckt und von einer vorderen Seite 46 und einer hinteren Seite 47 der Wand 44 weggeführt ist. Darüber hinaus ist die Konsole 43 mit einem Befestigungsabschnitt 48 an eine Einschürung 49 des Aufnahmegehäuses 40 herangeführt. Das Aufnahmegehäuse 40 und die Konsole 41 sind durch geeignete Mittel miteinander verbunden. Schließlich liegt das Aufnahmegehäuse 40 auf einer Auflageplatte 50 auf, die am Traghebel 30 zwischen dem hinteren Hebelarm 32 und dem vorderen Hebelarm 34 angeordnet ist.

## Patentansprüche

1. Kraftfahrzeug (1) mit einer Brennkraftmaschine (7), welche eine Abgasanlage (13) mit einem Schalldämpfer (15) umfasst, der unter Vermittlung mehrerer elastischer Stützlager (16,17,18) an festen Aufbaustrukturen (19,20,21) eines Aufbaus (6) des Kraftfahrzeugs (1) in Lage gehalten ist, wobei wenigstens ein erstes Stützlager (16) und ein zweites Stützlager (17) benachbart von Stirnseiten (28,29) des Schalldämpfers (15) angeordnet sind, wobei das erste Stützlager (16) sowie das zweite Stützlager (17) mit Abstand zu den Stirnseiten (28, 29) des Schalldämpfers (15) verlaufen und unter Vermittlung zweiarmiger Traghebel (30 und 31) an angrenzenden Aufbaustrukturen (22, 23) befestigt sind, **dadurch gekennzeichnet, dass** mittels eines dritten sich zwischen den Stirnseiten (28, 29) erstreckenden Stützlagers (18) der Schalldämpfer (15) mit einem hinteren Querträger (26) einer Aufbaustruktur (21) verbunden ist.

2. Kraftfahrzeug nach Anspruch 1, **dadurch gekennzeichnet, dass** das erste Stützlager (16) und das zweite Stützlager (17) an Wänden (44) der Stirnseiten (28 und 29) des Schalldämpfers (15) im wesentlichen baugleich ausgeführt sind, wobei zumindest das erste Stützlager (16) ein Aufnahmegehäuse (40) für elastische Elemente (41 und 42) besitzt, das an dem zugehörigen Traghebel (30) befestigt ist.

3. Kraftfahrzeug nach Anspruch 2, **dadurch gekennzeichnet, dass** das erste Stützlager (16) unter Vermittlung des Aufnahmegehäuses (40) an einer Konsole (43) der benachbarten Wand (44) des Schalldämpfers (15) befestigt ist.

4. Kraftfahrzeug nach Anspruch 3, **dadurch gekennzeichnet, dass** die Konsole (43) eine aufrechte Platte (45) ist, die von einer vorderen Seite (46) und einer hintere Seite (47) der Wand (44) weggeführt ist.

5. Kraftfahrzeug nach den Ansprüchen 3 und 4, **dadurch gekennzeichnet, dass** die Konsole (43) mit einem Befestigungsabschnitt (48) an eine Einschnürung (49) des Aufnahmegehäuses (40) herangeführt ist

6. Kraftfahrzeug nach Anspruch 2, **dadurch gekennzeichnet, dass** der Traghebel (30) zwischen dem hinteren Hebelarm (32) und dem vorderen Hebelarm (34) mit einer Auflageplatte (50) für das Aufnahmegehäuse (40) versehen ist.

7. Kraftfahrzeug nach Anspruch 6, **dadurch gekennzeichnet, dass** freie Enden (36 und 37) des hinteren Hebelarms (32) und des vorderen Hebelarms (34) des Traghebels (30) unter Vermittlung von Befestigungskonsolen (38 und 39) an der jeweiligen Aufbaustruktur (19) in Lage gehalten sind.

8. Kraftfahrzeug nach einem oder mehreren der vorangehenden Ansprüche, **dadurch gekennzeichnet, dass** der Traghebel (30 und 31) federnde Eigenschaften besitzt.

9. Kraftfahrzeug nach Anspruch 1, **dadurch gekennzeichnet, dass** das dritte Stützlager (18) in einer Mittellängsebene (B-B) des Schalldämpfers (15) zwischen den ersten Stützlager (16) und dem zweiten Stützlager (17) angeordnet ist.

## Claims

1. A motor vehicle (1) with an internal-combustion engine (7) which comprises an exhaust system (13) with a silencer (15) which is held in position on fixed body structures (19, 20, 21) of a body (6) of the motor vehicle (1) by means of a plurality of resilient support bearings (16, 17, 18), wherein at least one first support bearing (16) and one second support bearing (17) are arranged adjacent to end faces (28, 29) of the silencer (15), wherein the first support bearing (16) and the second support bearing (17) extend at a distance from the end faces (28, 29) of the silencer (15) and are fastened to adjacent body structures (22, 23) by means of two-armed carrier levers (30 and 31), **characterized in that** the silencer (15) is connected to a rear transverse carrier (26) of a body structure (21) by means of a third support bearing (18) extending between the end faces (28, 29).

2. A motor vehicle according to Claim 1, **characterized in that** the first support bearing (16) and the second support bearing (17) are constructed in a substantially structurally identical manner on walls (44) of the end faces (28 and 29) of the silencer (15), wherein at least the first support bearing (16) has a receiving housing (40) for resilient elements (41 and 42) which is fastened to the associated carrier lever (30).

3. A motor vehicle according to Claim 2, **characterized in that** the first support bearing (16) is fastened to a bracket (43) of the adjacent wall (44) of the silencer (15) by means of the receiving housing (40).

4. A motor vehicle according to Claim 3, **characterized in that** the bracket (43) is an upright plate (45) which extends away from a front side (46) and a rear side (47) of the wall (44).

5. A motor vehicle according to Claims 3 and 4, **characterized in that** the bracket (43) extends with a fastening portion (48) to a constriction (49) of the receiving housing (40).

6. A motor vehicle according to Claim 2, **characterized in that** the carrier lever (30) is provided with a support plate (50) for the receiving housing (40) between the rear lever arm (32) and the front lever arm (34).

7. A motor vehicle according to Claim 6, **characterized in that** the free ends (36 and 37) of the rear lever arm (32) and of the front lever arm (34) of the carrier lever (30) are held in position on the respective body structure (19) by means of fastening brackets (38 and 39).

8. A motor vehicle according to one or more of the preceding Claims, **characterized in that** the carrier lever (30 and 31) has springing characteristics.

9. A motor vehicle according to Claim 1, **characterized in that** third support bearing (18) is arranged between the first support bearing (16) and the second support bearing (17) in a central longitudinal plane (B-B) of the silencer (15).

## Revendications

1. Véhicule automobile (1) comprenant un moteur à combustion interne (7), lequel comporte un système d'échappement (13) doté d'un silencieux (15), qui est immobilisé sur des structures de carrosserie fixes (19, 20, 21) d'une carrosserie (6) du véhicule automobile (1) par l'intermédiaire de plusieurs paliers d'appui élastiques (16, 17, 18), au moins un premier palier d'appui (16) et un deuxième palier d'appui (17) étant disposés au voisinage des côtés frontaux (28, 29) du silencieux (15), le premier palier d'appui (16) ainsi que le deuxième palier d'appui (17) s'étendant à distance des côtés frontaux (28, 29) du silencieux (15) et étant fixés aux structures de carrosserie adjacentes (22, 23) par l'intermédiaire de leviers de support à deux bras (30 et 31), **caractérisé en ce que** le silencieux (15) est relié à une traverse arrière (26) d'une structure de carrosserie (21) au moyen d'un troisième palier d'appui (18) s'étendant entre les côtés frontaux (28, 29).

2. Véhicule automobile selon la revendication 1, **caractérisé en ce que** le premier palier d'appui (16) et le deuxième palier d'appui (17) sur les parois (44) des côtés frontaux (28 et 29) du silencieux (15) présentent sensiblement la même conception, au moins le premier palier d'appui (16) possédant un boîtier de réception (40) pour des éléments élastiques (41 et 42), lequel boîtier est fixé au levier de support (30) associé.

3. Véhicule automobile selon la revendication 2, **caractérisé en ce que** le premier palier d'appui (16), est fixé à une console (43) de la paroi voisine (44) du silencieux (15) par l'intermédiaire du boîtier de réception (40).

4. Véhicule automobile selon la revendication 3, **caractérisé en ce que** la console (43) est une plaque droite (45), qui est éloignée d'un côté avant (46) et d'un côté arrière (47) de la paroi (44).

5. Véhicule automobile selon l'une quelconque des revendications 3 et 4, **caractérisé en ce que** la console (43) dotée d'une section de fixation (48) est approchée d'un rétrécissement (49) du boîtier de réception (40).

6. Véhicule automobile selon la revendication 2, **caractérisé en ce que** le levier de support (30) entre le bras de levier arrière (32) et le bras de levier avant (34) est pourvu d'une plaque d'appui (50) pour le boîtier de réception (40).

7. Véhicule automobile selon la revendication 6, **caractérisé en ce que** les extrémités libres (36 et 37) du bras de levier arrière (32) et du bras de levier avant (34) du levier de support (30) sont immobilisées sur la structure de carrosserie (19) respective par l'intermédiaire de consoles de fixation (38 et 39).

8. Véhicule automobile selon l'une ou plusieurs des revendications précédentes, **caractérisé en ce que** le levier de support (30 et 31) possède des propriétés élastiques.

9. Véhicule automobile selon la revendication 1, **caractérisé en ce que** le troisième palier (18) est disposé dans un plan longitudinal médian (B-B) du silencieux (15) entre les premiers paliers d'appui (16) et le deuxième palier d'appui (17).
